# EUROPÄISCHE PATENTSCHRIFT

(11) **EP 2 155 532 B1**
(45) Veröffentlichungstag und Bekanntmachung des Hinweises auf die Patenterteilung: **05.09.2012**
(21) Anmeldenummer: 08760393.2
(22) Anmeldetag: 03.06.2008
(51) Int. Cl.: B62D 5/04, F16H 25/22

(54) **KUGELGEWINDETRIEB**
BALL SCREW DRIVE
VIS D'ENTRAÎNEMENT À BILLES

(30) Priorität: 08.06.2007 DE 102007026605
(43) Veröffentlichungstag der Anmeldung: 24.02.2010
(73) Patentinhaber: Schaeffler Technologies AG & Co. KG, 91074 Herzogenaurach (DE)
(72) Erfinder: ADLER, Dieter, 91074 Herzogenaurach (DE); ENGEL, Jürgen, 91325 Adelsdorf (DE); KREUTZER, Mario, 96515 Sonneberg (DE); OSTERLÄNGER, Jürgen, 91448 Emskirchen (DE); MAYER, Ralf, 91074 Herzogenaurach (DE)
(86) Internationale Anmeldenummer: PCT/EP2008/056809
(87) Internationale Veröffentlichungsnummer: WO 2008/148745

(56) Entgegenhaltungen:
- DE-A1- 10 258 826
- DE-A1-102005 023 274

## Beschreibung

Die vorliegende Erfindung betrifft ein Verfahren zur Herstellung eines Kugelgewindetriebes und einen Kugelgewindetrieb hergestellt nach diesem Verfahren, mit einer auf einer Gewindespindel drehbar angeordneten Spindelmutter entsprechend dem Oberbegriff des Anspruchs 1 und wie es aus der DE 10258826A bekannt ist.

Aus DE 103 10 505 A1 beispielsweise ist ein Lenksystem für eine Servolenkung eines Kraftfahrzeuges bekannt geworden, bei der ein lenkbares Rad gelenkig mit einer Schubstange zusammenwirkt, die mittels eines Kugelgewindetriebes entlang ihrer Achse verschoben werden kann. Der Kugelgewindetrieb weist eine Spindelmutter auf, die auf einer einstückig mit der Schubstange verbundenen Gewindespindel drehbar angeordnet ist. In bekannter Weise wälzen zwischen der Gewindespindel und der Spindelmutter angeordnete Kugeln an Kugelrillen der Spindelmutter und der Gewindespindel ab. Eine Zahnriemenscheibe ist am Außenumfang der Spindelmutter drehfest angeordnet. Eine drehfeste Verbindung kann formschlüssig, reibschlüssig oder auch stoffschlüssig erfolgen.

Insbesondere bei Anwendung von Kugelgewindetrieben in elektromechanischen Lenkunterstützungen von Kraftfahrzeugen wird seitens der Autohersteller großer Wert auf ruckfrei und leise arbeitende Kugelgewindetriebe gelegt. Um diesen Anforderungen zu genügen, kann beispielsweise das Spiel der Kugeln zwischen der Gewindespindel und der Spindelmutter reduziert werden. Nach Montage einer beispielsweise reibschlüssig mit der Spindelmutter verbundenen Riemenscheibe infolge eines Presssitzes kann es zu unerwünschten Einschnürungen zwischen der Spindelmutter und der Gewindespindel kommen, so dass das Spiel der Kugeln zwischen der Spindelmutter und der Gewindespindel unzulässig reduziert wird. Abhilfe könnte geschaffen werden, in dem anstelle eines Presssitzes eine formschlüssige Verbindung bereitgestellt wird. Allerdings bedingen formschlüssige Verbindungen wieder erhöhten Fertigungsaufwand und unter Umständen das Vorsehen weiterer Bauteile. Alternativ könnte das Radialspiel der Kugeln zwischen der Spindelmutter und der Gewindespindel so erhöht werden, dass nach einem Aufpressen der Riemenscheibe auf die Spindelmutter im Bereich des Presssitzes gerade das vorgesehene Spiel eingestellt ist. Jedoch kann bei derartigen Weiterbildungen der Nachteil auftreten, dass außerhalb des Presssitzes ein unzulässig hohes Spiel der Kugeln zwischen Spindelmutter und Gewindespindel die Folge ist.

Eine weitere alternative Lösung könnte sein, das Antriebsteil oder auch die Riemenscheibe axial beabstandet von dem Teil der Spindelmutter anzuordnen, an dem aktiv genutzte Kugelrillen ausgebildet sind. Jedoch hat diese alternative Lösung zur Folge, dass der Kugelgewindetrieb axial einen größeren Bauraum beansprucht, der bei modernen Kraftfahrzeugen nicht zur Verfügung steht.

Aufgabe der vorliegenden Erfindung war es daher, ein Verfahren zur Herstellung eines einen Kugelgewindetriebes nach den Merkmalen des Oberbegriffs des Anspruchs 1 anzugeben, bei dem diese Nachteile vermieden sind.

Erfindungsgemäß wird diese Aufgabe durch das Verfahren gemäß Anspruch 1 gelöst. Dadurch dass das Antriebsteil in axialer Richtung zumindest überlappend mit der Kugelrille der Spindelmutter angeordnet ist, kann ein axial kleinbauender Kugelgewindetrieb bereitgestellt werden. Dadurch, dass zwischen dem Antriebsteil und der Spindelmutter ein Übergangs- oder Presssitz ausgebildet ist, kann eine einwandfreie drehfeste Verbindung zwischen dem Antriebsteil und der Spindelmutter bereitgestellt werden. Kombiniert mit dem weiteren erfindungsgemäßen Merkmal, wonach die Kugelrille der Spindelmutter bei montiertem Antriebsteil spangebend fertiggestellt wird, ist ein erfindungsgemäßer Kugelgewindetrieb bereitgestellt, bei dem das Spiel der Kugeln zwischen der Spindelmutter und der Gewindespindel über die gesamte Erstreckung der Kugelrillen einwandfrei eingestellt werden kann. Insbesondere bei dünnwandig bauenden Spindelmuttern kann eine unerwünschte Einschnürung der Spindelmutter dadurch kompensiert werden, dass in diesem Bereich des Übergangs- oder Presssitzes etwas mehr Material spangebend an der Kugelrille der Spindelmutter entfernt wird. Nach Abschluss der spangebenden Bearbeitung ist ein gleichmäßiges Kugelrillenprofil mit gleichem Spiel der Kugeln in der von den Kugelrillen gebildeten Kugelbahn über den gesamten axialen Bereich der Spindelmutter bereitgestellt. Das erfindungsgemäße Zusammenspiel von überlappender Anordnung des Antriebsteiles, reibschlüssiger Verbindungen zwischen Antriebsteil und Spindelmutter, sowie spangebender Fertigstellung der Kugelrille bei montiertem Antriebsteil bietet eine Lösung für die Vermeidung der eingangs geschilderten Nachteile.

Das Antriebsteil kann durch einen Flansch gebildet sein, an dem beispielsweise ein Zahnkranz oder eine Zahnriemenscheibe oder aber auch ein Gegenflansch angeflanscht werden kann. Das Antriebsteil und die Spindelmutter sind in diesem Fall aus Stahl gebildet und die Spindelmutter ist in einem Wärmebehandlungsverfahren gehärtet, wobei das Antriebsteil ungehärtet bleibt. Bei dieser erfindungsgemäßen Weiterbildung kann die Spindelmutter zunächst in dem Wärmebehandlungsverfahren gehärtet werden. Im Anschluss daran kann das weiche Antriebsteil auf die Spindelmutter aufgepresst werden. Während die Spindelmutter und beispielsweise der Zahnriemenkranz in einem Wärmebehandlungsverfahren gehärtet sein können, bleibt das Antriebsteil weich. Dies hat den Vorteil, dass bei dynamischer Beanspruchung des Antriebsteiles eine Rissbildung insbesondere im Bereich von Bohrungen zur Befestigung des Zahnriemenkranzes mittels Befestigungsschrauben deutlich reduziert ist.

In bekannter Weise weisen derartige Flansche eine Aufnahme für das Anschlussteil auf, also beispielsweise für einen Zahnriemenkranz oder eine Zahnriemenscheibe. Diese Aufnahme kann nach Aufpressen des Flansches auf die Spindelmutter ebenfalls spangebend - beispielsweise durch Schleifen - fertiggestellt werden. Mit dieser Maßnahme kann eine einwandfreie Ausrichtung der Aufnahme in Bezug auf die Spindelmutter eingestellt werden, so dass diese Aufnahme beispielsweise einwandfrei quer zur Spindelachse ausgerichtet ist. Eine nachträgliche Schleifbearbeitung des Antriebsteiles im Bereich der Aufnahme stellt einen hinreichend genauen Planund Rundlauf des Antriebsteiles und somit auch des angeschlossenen Zahnriemenkranzes sicher.

In bekannter Weise kann an der Spindelmutter am Außenumfang eine einstückig angeformte Kugelrille ausgebildet sein, so dass die Spindelmutter über ein Rillenkugellager an einem Gehäuse einfach gelagert werden kann.

Im Hinblick auf eine weitere Verbesserung der Verbindung zwischen der Spindelmutter und dem Antriebsteil können zu wenigstens einer axialen Seite des Antriebsteiles an der Spindelmutter Vertiefungen, vorzugsweise in Form einer Nut oder einer Fase angebracht sein, wobei Material des Antriebsteiles zu seiner axialen Fixierung mit der Spindelmutter in die Vertiefungen hineinverdrängt wird. Auf diese Weise ist neben der drehfesten Verbindung auch eine einwandfreie axiale Fixierung des Antreibsteiles auf der Spindelmutter gewährleistet. In bekannter Weise kann die Spindelmutter mit einer Schulter als Anschlag für das Antriebsteil versehen sein. Wenn beispielsweise das Antriebsteil auf die Spindelmutter aufgepresst wird, kann dies maschinell erfolgen. Der Einpressvorgang ist beendet, wenn das Antriebsteil stirnseitig gegen die Schulter anschlägt. Diese Schulter kann zusätzlich zu den oben erwähnten Rillen oder Fasen vorgesehen werden, in die Material des Antriebsteiles hinein verdrängt werden kann. Denkbar ist hier ein Prägevorgang.

Nachstehend wird die Erfindung anhand von drei in insgesamt fünf Figuren abgebildeten Ausführungsbeispielen näher erläutert. Es zeigen:
- Figur 1: einen erfindungsgemäßen Kugelgewindetrieb im Längsschnitt,
- Figur 2: den Kugelgewindetrieb aus Figur 1, jedoch ohne Zahnriemenscheibe,
- Figur 3: eine Spindelmutter wie in Figur 2, jedoch mit Rändel am Außenumfang,
- Figur 4: die Spindelmutter aus Figur 3 im Längsschnitt mit montiertem Antriebsteil und
- Figur 5: in perspektivischer Darstellung eine weitere erfindungsgemäße Variante.

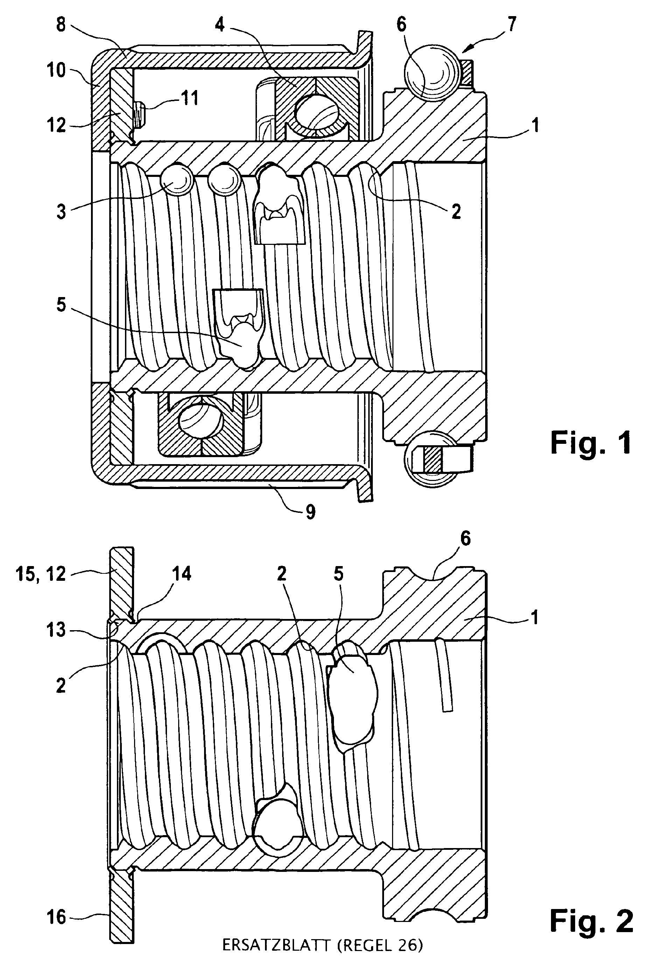

Figur 1 zeigt im Längsschnitt einen erfindungsgemäßen Kugelgewindetrieb, bei dem eine Spindelmutter 1 drehbar auf einer hier nicht abgebildeten Gewindespindel angeordnet ist. Am Innenumfang der Spindelmutter 1 sind schraubenförmig ausgebildete Kugelrillen 2 vorgesehen, an denen Kugeln 3 abwälzen können. In bekannter Weise ist eine Außenumlenkung 4 vorgesehen, die einen Anfang und ein Ende eines von den Kugelrillen begrenzten Kugelkanals endlos miteinander verbinden. Die Kugeln 3 werden über die Außenumlenkung 4 von einem Ende des Kugelkanals zu dem Anfang dieses Kugelkanals umgelenkt. Für eine Verbindung der Außenumlenkung 4 mit den von den Kugelrillen begrenzten Kugelkanälen ist die Spindelmutter 1 mit Durchbrüchen 5 versehen, durch die Kugeln 3 in die Außenumlenkung 4 hineingeführt werden können.

An ihrem einen axialen Ende ist die Spindelmutter 1 mit einer einstückig angeformten Kugelrille 6 eines Rillenkugellagers 7 versehen, über welches Rillenkugellager 7 die Spindelmutter 1 des Kugelgewindetriebes an einem hier nicht abgebildeten Gehäuse drehbar gelagert ist.

Mit der Spindelmutter 1 drehfest verbunden ist eine Zahnriemenscheibe 8, an deren Außenumfang eine Stirnverzahnung 9 ausgebildet ist. Diese Zahnriemenscheibe 8 ist etwa topfförmig ausgeführt, wobei ein Boden 10 der Zahnriemenscheibe 8 über Befestigungsschrauben 11 an ein Antriebsteil 12 angeschraubt ist. Das Antriebsteil 12 ist zu diesem Zweck mit mehreren über den Umfang verteilt angeordneten - hier nicht abgebildeten - Gewindebohrungen versehen, in die die Befestigungsschrauben 11 hineingeschraubt sind. Das Antriebsteil 12 ist drehfest mit der Spindelmutter 1 verbunden.

Figur 2 zeigt den Kugelgewindetrieb aus Figur 1, jedoch ohne Zahnriemenscheibe 8. Der Figur ist deutlich zu entnehmen, dass die Spindelmutter 1 an ihrem linksseitigen Ende mit einer Fase 13 versehen ist, und mit axialen Abstand dazu mit einer umlaufenden Nut 14, wobei Material des zwischen der Fase 13 und der Nut 14 angeordneten Antriebsteiles 12 in die Fase 13 und in die Nut 14 hinein mittels eines Prägevorgangs hineinverdrängt ist. Dadurch ist eine einwandfreie axiale Fixierung des Antriebsteiles 12 auf der Spindelmutter 1 gewährleistet. Zudem ist das Antriebsteil 12 auf die Spindelmutter 1 aufgepresst. Dadurch ist eine einwandfreie drehfeste Verbindung zwischen dem Antriebsteil 12 und der Spindelmutter 1 gewährleistet. Die mit dem Antriebsteil 12 versehene Spindelmutter 1 wurde spangebend bearbeitet: Die Kugelrille 2 ist zunächst infolge des Aufpressens des Antriebsteiles 12 im Bereich der Pressverbindung etwas eingeschnürt. Durch eine spangebende Nachbearbeitung - durch einen Schleifvorgang - der Kugelrille 12 kann diese Einschnürung beseitigt werden. Das hier nicht abgebildete Schleifwerkzeug fährt entlang der Kugelrille 2 und bearbeitet diese Kugelrille 2. Nach Abschluss dieses Schleifvorganges ist die erwähnte Einschnürung beseitigt, so dass die Kugeln 3 mit gleichem Spiel über die gesamte Erstreckung der Kugelrille 2 im Kugelgewindetrieb abwälzen.

Das Antriebsteil 12 bildet hier einen Flansch 15, an dessen stirnseitiger Aufnahme 16 die Zahnriemenscheibe 8 angeflanscht ist. Die Aufnahme kann vorzugsweise nach Aufpressen des Flansches 15 auf die Spindelmutter 1 ebenfalls spangebend bearbeitet werden, so dass ein einwandfreier Planlauf und Rundlauf des Flansches 15 auf der Spindelmutter 1 gewährleistet ist.

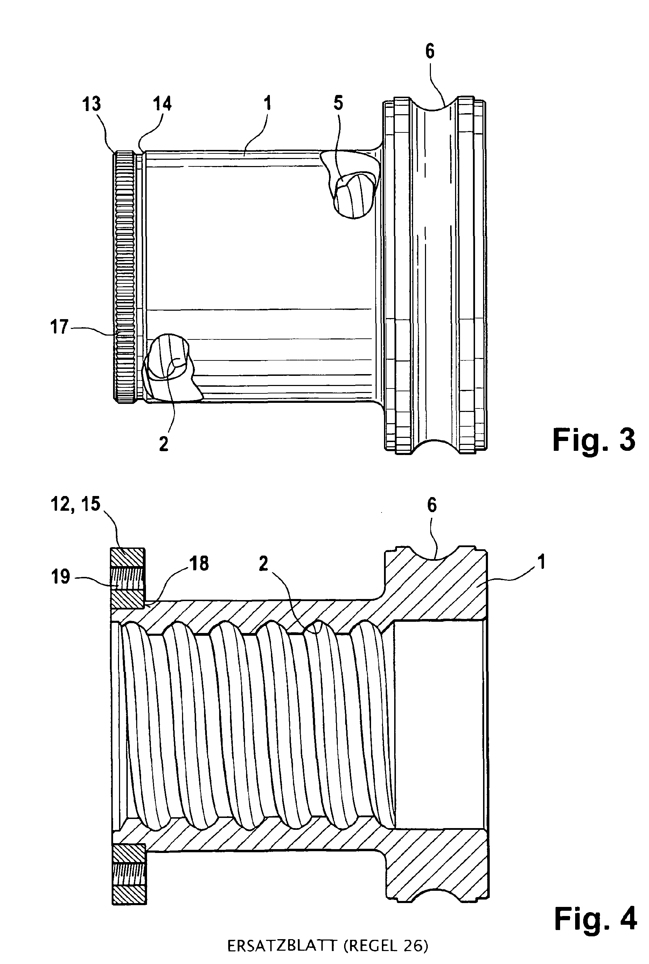

Figur 3 zeigt die Spindelmutter 1 aus den Figuren 1 und 2, jedoch ohne aufgepresstes Antriebsteil 12 und mit einer Rändelung 17. Der Figur 3 ist zu entnehmen, dass im Bereich des Sitzes des Antriebsteiles am Außenumfang der Spindelmutter 1 die Rändelung 17 ausgebildet ist. Mit dem Aufpressen des Antriebsteiles 12 wird die Rändelung 17 plastisch verformt.

Figur 4 zeigt eine erfindungsgemäße Variante, die sich von den oben beschriebenen Ausführungsbeispielen im Wesentlichen dadurch unterscheidet, dass die Spindelmutter 1 an ihrem das Antriebsteil 12 aufnehmenden Ende mit einer Schulter 18 versehen ist. Das Antriebsteil 12, also der Flansch 15 schlägt gegen diese Schulter 18 an. Auf diese Weise ist eine einwandfreie axiale Positionierung des Flansches 15 auf der Spindelmutter 1 gewährleistet. Dieser Figur sind deutlich die bereits oben erwähnten Gewindebohrungen 19 zu entnehmen, in die hier nicht abgebildete Befestigungsschrauben zur Befestigung der Zahnriemenscheibe hineingeschraubt sind. Das Antriebsteil 12 bleibt weich, das bedeutet, es wird nicht in einem Wärmebehandlungsverfahren gehärtet.

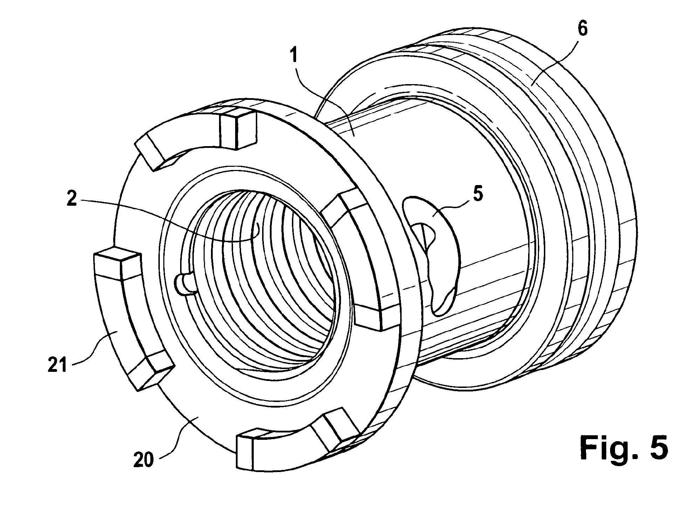

Figur 5 zeigt eine weitere Variante eines erfindungsgemäßen Kugelgewindetriebes, der sich von den zuvor beschriebenen Ausführungsbeispielen im Wesentlichen durch ein modifiziertes Antriebsteil 20 unterscheidet. Das Antriebsteil 20 ist ebenso wie bei den oben beschriebenen Ausführungsbeispielen auf die Spindelmutter 1 aufgepresst. Jedoch schließt an dieses Antriebsteil 20 kein Zahnriemenkranz an. Vielmehr kann hier der Rotor eines hier nicht abgebildeten Elektromotors unmittelbar angreifen. Zu diesem Zweck ist das Antreibsteil 20 mit mehreren stirnseitig über den Umfang verteilt angeordneten Klauen 21 versehen, die formschlüssig mit einem Gegenstück an dem erwähnten Rotor zusammenarbeiten können.

### Bezugszahlenliste

- 1: Spindelmutter
- 2: Kugelrille
- 3: Kugel
- 4: Außenumlenkung
- 5: Durchbruch
- 6: Kugelrille
- 7: Rillenkugellager
- 8: Zahnriemenscheibe
- 9: Stirnverzahnung
- 10: Boden
- 11: Befestigungsschraube
- 12: Antriebsteil oil
- 13: Fase
- 14: Nut
- 15: Flansch
- 16: Aufnahme
- 17: Rändelung
- 18: Schulter
- 19: Gewindebohrung
- 20: Antriebsteil
- 21: Klaue

## Patentansprüche

1. Verfahren zur Herstellung eines Kugelgewindetriebes, mit einer auf einer Gewindespindel drehbar angeordneten Spindelmutter (1), zwischen der und der Gewindespindel Kugeln (3) an Kugelrillen (2) der Spindelmutter (1) und der Gewindespindel abwälzen, wobei ein Antriebsteil (12, 20) auf der Spindelmutter (1) angeordnet ist, wobei das Antriebsteil (12, 20) in axialer Richtung zumindest überlappend mit der Kugelrillen (2) der Spindelmutter (1) angeordnet und ein Übergangs- oder Presssitz zwischen dem Antriebsteil (12, 20) und der Spindelmutter (1) ausgebildet ist, **dadurch gekennzeichnet, dass** die Kugelrille (2) der Spindelmutter (1) bei montiertem Antriebsteil (12, 20) spangebend fertiggestellt wird.

2. Verfahren zur Herstellung eines Kugelgewindetriebes nach Anspruch 1, bei dem das Antriebsteil (12) durch einen Flansch (15) gebildet ist, an den beispielsweise ein Zahnriemenkranz, oder Zahnriemenscheibe (8) oder ein Gegenflansch anflanschbar ist, wobei das Antriebsteil (12) und die Spindelmutter (1) aus Stahl gebildet und die Spindelmutter in einem Wärmebehandlungsverfahren gehärtet und das Antriebsteil (12) ungehärtet ist.

3. Verfahren zur Herstellung eines Kugelgewindetriebes nach Anspruch 1, bei dem der Flansch (15) eine Aufnahme (16) für einen Zahnriemenkranz oder Zahnriemenscheibe (8) oder einen Gegenflansch aufweist, die nach Montage des Flansches (15) auf die Spindelmutter (1) spangebend fertiggestellt wird.

4. Verfahren zur Herstellung eines Kugelgewindetriebes nach Anspruch 1, bei dem die Spindelmutter (1) an ihrem Außenumfang mit einer einstückig angeformten Kugelrille (6) versehen ist.

5. Verfahren zur Herstellung eines Kugelgewindetriebes nach Anspruch 1, bei dem zu wenigstens einer axialen Seite des Antriebsteiles (12) an der Spindelmutter (1) Vertiefungen, vorzugsweise in Form einer Nut (14) oder einer Fase (13) angebracht sind, wobei Material des Antriebsteiles (12) zu seiner axialen Fixierung mit der Spindelmutter (1) in die Vertiefungen hinein verdrängt ist.

6. Kugelgewindetrieb, hergestellt nach dem Verfahren gemäß Anspruch 2, bei dem der ungehärtete Flansch (15) mit Gewindebohrungen (19) zur Befestigung des Zahnriemenkranzes, oder der Zahnriemenscheibe (8) oder des Gegenflansches versehen ist.

7. Kugelgewindetrieb, hergestellt nach dem Verfahren gemäß Anspruch 1, bei dem die Spindelmutter (1) mit einer Schulter (18) als Anschlag für das Antriebsteil (12) versehen ist.

## Claims

1. Method for manufacturing a ball screw drive, having a spindle nut (1) which is arranged rotatably on a threaded spindle and between which and the threaded spindle balls (3) roll on ball grooves (2) of the spindle nut (1) and the threaded spindle, a drive part (12, 20) being arranged on the spindle nut (1), the drive part (12, 20) being arranged in the axial direction so as to be at least overlapping with the ball groove (2) of the spindle nut (1), and a transition fit or interference fit being formed between the drive part (12, 20) and the spindle nut (1), **characterized in that** the ball groove (2) of the spindle nut (1) is finished in a material-removing manner when the drive part (12, 20) is mounted.

2. Method for manufacturing a ball screw drive according to Claim 1, in which the drive part (12) is formed by a flange (15), to which, for example, a toothed-belt flat ring or toothed-belt pulley (8) or a mating flange can be flange-connected, the drive part (12) and the spindle nut (1) being formed from steel and the spindle nut being hardened in a heat treatment process and the drive part (12) being non-hardened.

3. Method for manufacturing a ball screw drive according to Claim 1, in which the flange (15) has a receptacle (16) for a toothed-belt flat ring or toothed-belt pulley (8) or a mating flange which is finished in a material-removing manner after the flange (15) has been mounted onto the spindle nut (1).

4. Method for manufacturing a ball screw drive according to Claim 1, in which the spindle nut (1) is provided on its outer circumference with an integrally formed ball groove (6).

5. Method for manufacturing a ball screw drive according to Claim 1, in which depressions, preferably in the form of a channel (14) or a bevel (13), are made on the spindle nut (1) towards at least one axial side of the drive part (12), material of the drive part (12) being displaced into the depressions in order to fix the said drive part (12) axially to the spindle nut (1).

6. Ball screw drive, manufactured in accordance with the method according to Claim 2, in which the non-hardened flange (15) is provided with threaded holes (19) for fastening the toothed-belt flat ring, or the toothed-belt pulley (8) or the mating flange.

7. Ball screw drive, manufactured in accordance with the method according to Claim 1, in which the spindle nut (1) is provided with a shoulder (18) as a stop for the drive part (12).

## Revendications

1. Procédé de fabrication d'une vis d'entraînement à billes, comprenant une vis-mère (1) disposée de manière rotative sur une broche filetée, entre laquelle et la broche filetée roulent des billes (3) sur des gorges à billes (2) de la vis-mère (1) et de la broche filetée, une partie d'entraînement (12, 20) étant disposée sur la vis-mère (1), la partie d'entraînement (12, 20) étant disposée dans la direction axiale de manière à au moins chevaucher la gorge à billes (2) de la vis-mère (1), et un ajustement à transition ou serré étant réalisé entre la partie d'entraînement (12, 20) et la vis-mère (1), **caractérisé en ce que** la gorge à billes (2) de la vis-mère (1) est fabriquée par enlèvement de copeaux lorsque la partie d'entraînement (12, 20) est montée.

2. Procédé de fabrication d'une vis d'entraînement à billes selon la revendication 1, dans lequel la partie d'entraînement (12) est formée par une bride (15) à laquelle peut être raccordée par bridage par exemple une couronne de courroie dentée, ou une poulie de courroie dentée (8) ou une bride conjuguée, la partie d'entraînement (12) et la vis-mère (1) étant formées en acier et la vis-mère étant trempée au cours d'un procédé de traitement thermique et la partie d'entraînement (12) n'étant pas trempée.

3. Procédé de fabrication d'une vis d'entraînement à billes selon la revendication 1, dans lequel la bride (15) présente un logement (16) pour une couronne de courroie dentée ou une poulie de courroie dentée (8) ou une bride conjuguée, qui, après le montage de la bride (15) sur la vis-mère (1), est fabriquée par enlèvement de copeaux.

4. Procédé de fabrication d'une vis d'entraînement à billes selon la revendication 1, dans lequel la vis-mère (1) est munie sur sa périphérie extérieure d'une gorge à billes (6) façonnée d'une seule pièce.

5. Procédé de fabrication d'une vis d'entrainement à billes selon la revendication 1, dans lequel sur au moins un côté axial de la partie d'entraînement (12) sur la vis-mère (1) sont pratiqués des renfoncements, de préférence en forme de rainure (14) ou de biseau (13), la matière de la partie d'entraînement (12), en vue de sa fixation à la vis-mère (1), étant repoussée à l'intérieur des renfoncements.

6. Vis d'entraînement à billes, fabriquée selon le procédé selon la revendication 2, dans laquelle la bride non trempée (15) est pourvue d'alésages filetés (19) pour la fixation de la couronne de courroie dentée, ou de la poulie de courroie dentée (8) ou de la bride conjuguée.

7. Vis d'entrainement à billes, fabriquée selon le procédé selon la revendication 1, dans laquelle la vis-mère (1) est munie d'un épaulement (18) servant de butée pour la partie d'entraînement (12).
